# FASCICULE DE BREVET EUROPEEN

(11) **EP 2 159 344 B1**
(45) Date de publication et mention de la délivrance du brevet: **30.11.2011**
(21) Numéro de dépôt: 09168561.0
(22) Date de dépôt: 25.08.2009
(51) Int. Cl.: E04F 11/18, F16B 7/04

(54) **Etrier pour la fixation d'une barre sur un montant**
Bügel für die Befestigung einer Strebe auf einem Pfosten
Calliper for fixing a bar to an upright

(30) Priorité: 26.08.2008 FR 0804710
(43) Date de publication de la demande: 03.03.2010
(73) Titulaire: DANI ALU, 69280 Sainte Consorce (FR)
(72) Inventeur: Laffay, Serge, 69340 Francheville (FR); Duplat, Bruno, 69340 Francheville (FR)
(74) Mandataire: Chevalier, Renaud Philippe

(56) Documents cités:
- EP-A- 0 856 626
- EP-A- 1 647 648
- DE-A1- 3 603 458
- FR-A- 2 497 848

## Description

La présente invention se rapporte à un étrier pour la fixation d'une barre sur un montant.

Elle se rapporte plus particulièrement à un étrier comprenant une bague pourvue d'une face interne délimitant un passage pour ladite barre et d'une face externe.

Il est connu dans le domaine des dispositifs de garde-corps d'employer de tels étriers pour fixer les barres sur les montants.

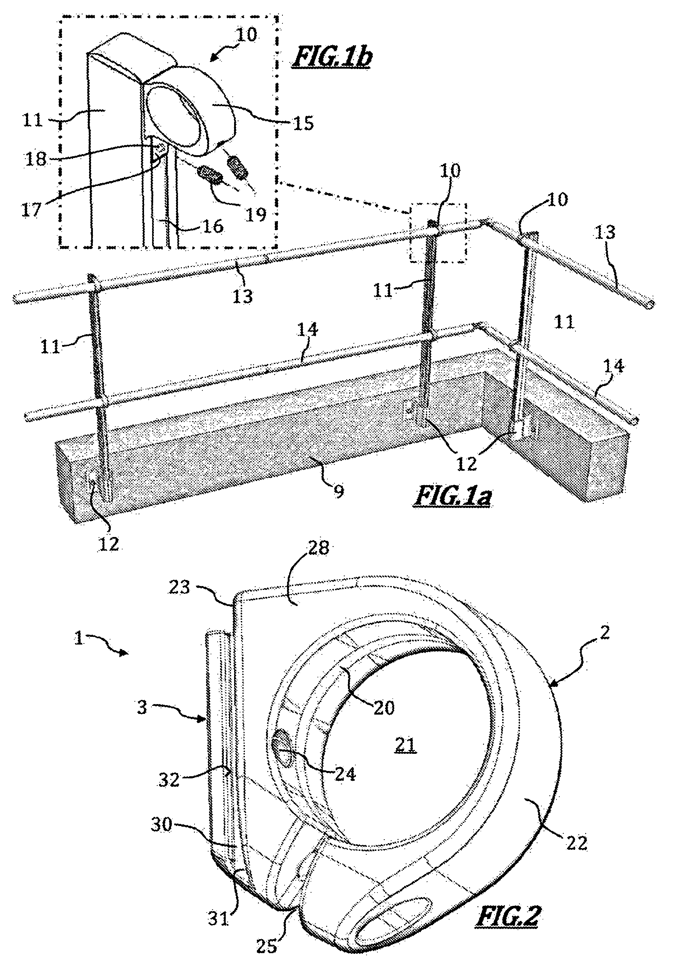

De façon connue et comme illustré en figure 1a, un dispositif de garde-corps est employé dans le domaine du bâtiment pour assurer la sécurisation des personnes situées sur des ouvrages 9 en hauteur, du type terrasse ou toiture par exemple.

Un dispositif de garde-corps s'étend ainsi le long des bordures de terrasse ou de toiture, et comprend une succession de montants 11 fixés sur l'ouvrage 9 au moyen de sabots de garde-corps 12 généralement vissés dans ledit ouvrage 9. Il est également d'usage de prévoir entre les montants 11 une ou plusieurs barres ou barreaux 13, 14, comme par exemple une barre haute 13 rapportée au niveau des extrémités supérieures libres respectives des montants 11 et formant une main courante et éventuellement une ou plusieurs barres basses ou intermédiaires 14 disposées sous la barre haute 13.

Pour fixer une barre 13, 14 sur un montant 11, il est connu d'employer un étrier 10. Un étrier 10 du type connu est illustré en figure 1b et comprend une bague 15 traversée par la barre et montée à coulissement dans un rail de guidage 16 ménagé sur toute la hauteur du montant 11. L'étrier 10 comprend également des moyens d'ancrage sur ledit montant 11, lesdits moyens d'ancrage comprenant une patte 17 saillante de ladite bague 15 et pourvue d'un orifice 18 pour le passage d'une vis 19 qui, une fois vissée, bloque l'étrier 10 sur ledit montant 11. Cet étrier présente l'inconvénient d'être peu esthétique avec une patte 15 et une vis 19 visible de l'extérieur, et de fabrication complexe avec cet ajout d'une patte sur la bague d'étrier.

L'état de la technique peut également être illustré par l'enseignement du document DE 36 03 458 A1 qui divulgue un étrier comprenant une pièce en forme d'arche montée sur un montant au moyen de butées engagées dans une rainure du montant et serrées dans la rainure grâce à des vis visibles de l'extérieur.

La présente invention a notamment pour but de résoudre ces inconvénients, et propose à cet effet un étrier pour la fixation d'une barre sur un montant, ledit étrier comprenant une bague pourvue d'une face interne délimitant un passage pour ladite barre et d'une face externe, ledit étrier étant remarquable en ce qu'il comprend au moins un organe formant butée faisant saillie de la face externe de la bague, et en ce qu'il comprend au moins un orifice traversant ménagé dans ladite bague entre ses faces interne et externe et destiné à accueillir un organe d'ancrage, ledit orifice étant agencé et disposé relativement audit organe formant butée de sorte que, en situation sur un montant, l'organe d'ancrage puisse traverser ledit orifice pour venir en appui contre une paroi dudit montant et en retour plaquer ledit organe formant butée contre une autre paroi dudit montant afin d'ancrer ledit étrier sur ledit montant.

Ainsi, les moyens employés pour ancrer l'étrier selon l'invention sur le montant ne sont pas visibles de l'extérieur, une fois la barre engagée dans la bague. En effet, l'orifice et l'organe d'ancrage sont dissimulés par la barre qui vient recouvrir l'entrée dudit orifice ménagée dans la face interne de ladite bague.

Pour assurer l'ancrage de l'étrier sur le montant, il suffit donc d'engager l'organe formant butée contre une paroi du montant et de déplacer l'organe d'ancrage d'une position dite de repos vers une position dite d'ancrage. L'ensemble formé de l'organe formant butée et de l'organe d'ancrage assure l'ancrage de l'étrier sur le montant, avec deux surfaces d'appui distinctes sur le montant, en l'occurrence celle de l'organe formant butée contre une paroi du montant et celle de l'organe d'ancrage contre une autre paroi du montant ; l'agencement et la disposition relative de l'orifice étant essentiels pour que l'organe d'ancrage puisse, en venant en appui contre l'une des parois du montant, provoquer en réaction une plaquage de l'organe formant butée contre une autre paroi du montant.

Dans un mode de réalisation particulier de l'invention, l'orifice est incliné par rapport à l'organe formant butée de sorte que, dans une position dite d'ancrage de l'étrier, l'organe formant butée et l'organe d'ancrage sont divergents en s'écartant l'un de l'autre vers des directions différentes.

En s'écartant l'un de l'autre, l'organe formant butée et l'organe d'ancrage assure un ancrage efficace sur deux parois distinctes du montant, comme des parois parallèles en vis-à-vis délimitant une rainure dans laquelle est engagé l'organe formant butée, en agissant ensemble à la manière de deux mâchoires qui s'écartent l'une de l'autre pour venir se prendre à l'intérieur d'une rainure ou d'une cavité et s'ancrer en prenant chacune appui sur les parois délimitant ladite rainure ou cavité. En outre, avec un tel orifice incliné, il est aisé d'engager un outil pour déplacer l'organe d'ancrage sans être gêné par la bague, de sorte que l'ancrage de l'étrier est rapide, simple et efficace.

Selon une caractéristique, l'organe formant butée fait saillie d'une partie plane de la face externe de la bague, et l'orifice s'étend de façon oblique par rapport à ladite partie plane.

En débouchant de façon oblique par rapport à ladite partie plane, l'organe d'ancrage qui se déplace dans ledit orifice débouche également de façon oblique par rapport à ladite partie plane et aussi de façon divergente par rapport à l'organe formant butée, afin de permettre une prise sur le montant suffisante pour l'ancrage de l'étrier sur ledit montant. L'orifice peut par exemple déboucher directement dans la partie plane ou dans l'organe formant butée si l'orifice traverse en partie ledit organe formant butée.

Selon une autre caractéristique, l'organe formant butée présente un cran adapté pour retenir ledit organe formant butée dans une rainure du montant.

Avec un tel cran, l'organe formant butée offre deux surfaces d'appui distinctes, à savoir les deux surfaces délimitant le cran, améliorant ainsi la prise sur le montant et diminuant le risque de désengagement de l'organe formant butée et donc de l'étrier vis-à-vis du montant.

Dans une réalisation particulière, l'orifice est fileté et l'organe d'ancrage se présente sous la forme d'une pièce rectiligne pourvue d'un filetage externe adapté pour coopérer avec ledit orifice fileté.

Ainsi, pour assurer le déplacement de l'organe d'ancrage entre sa position dite de repos et sa position dite d'ancrage de l'étrier, il suffit de visser l'organe d'ancrage dans l'orifice fileté. En venant en appui contre une paroi du montant, l'organe d'ancrage fileté vient buter contre ladite paroi et, en réaction à cette mise en butée, exerce un effort sur la bague via son filetage et le filetage de l'orifice fileté. Cet effort se traduit par un déplacement de la bague, ledit montant étant fixe, et ainsi par un déplacement de l'organe formant butée dans une direction de plaquage contre l'autre paroi du montant ; cette direction de plaquage étant déterminée notamment par la disposition et l'orientation de l'orifice,

Avantageusement, l'organe d'ancrage se termine par une pointe adaptée pour venir poinçonner une paroi du montant en position dite d'ancrage.

Une telle extrémité pointue renforce encore plus l'ancrage de l'étrier sur le montant.

Dans une réalisation particulière, l'étrier comprend des moyens de serrage de ladite barre dans ladite bague.

De façon avantageuse, les moyens de serrage comprennent une fente ménagée dans ladite bague et une vis adaptée pour fermer plus ou moins ladite fente. Ainsi, la bague fendue est plus ou moins serrée autour de la barre en fonction du serrage de ladite vis.

Dans une variante, les moyens de serrage comprennent une vis de serrage traversant la bague de part en part pour imprimer un effort de serrage sur la barre. Dans une autre variante, les moyens de serrage comprennent deux fentes ménagées dans la bague de sorte que la bague soit formée de deux demi bagues assemblées entre elles par deux vis adaptées pour fermer plus ou moins lesdites fentes respectives et ainsi pour que la bague serre plus ou moins la barre disposée entre ses deux demi bagues.

L'invention se rapporte également à un ensemble comportant un étrier conforme à l'invention et un montant sur lequel est monté ledit étrier.

Selon une possibilité de l'invention, le montant comprend une rainure rectiligne délimitée par deux parois en regard, et l'organe formant butée est plaquée contre l'une des parois et l'organe d'ancrage est en butée contre l'autre des parois.

Dans une réalisation particulière, l'organe formant butée présente un cran délimité par deux surfaces inclinées l'une par rapport à l'autre, et dans lequel l'organe d'ancrage exerce un effort de plaquage tel que les deux dites surfaces du cran de l'organe formant butée sont toutes deux en appui contre la paroi correspondante délimitant ladite rainure.

D'autres caractéristiques et avantages de la présente invention apparaîtront à la lecture de la description détaillée ci-après, d'un exemple de mise en oeuvre non limitatif, faite en référence aux figures annexées, et en particulier les figures 2 à 8, et dans lesquelles :
- la figure 1 a est une vue en perspective d'un dispositif de garde-corps équipé d'un étrier du type connu ;
- la figure 1b est une vue d'un détail de la figure 1a illustrant un étrier du type connu ;
- la figure 2 est une vue en perspective d'un étrier conforme à l'invention ;
- la figure 3 est une vue en perspective d'un étrier conforme à l'invention en situation d'ancrage sur un montant et en l'absence de barre ;
- la figure 4 est une vue de côté d'un étrier conforme à l'invention en situation d'ancrage sur un montant et en l'absence de barre ;
- la figure 5 est une vue en coupe transversale selon l'axe V-V de la figure 4 d'un étrier conforme à l'invention seul ;
- la figure 6 est une vue en coupe transversale selon l'axe VI-VI de la figure 4 d'un étrier conforme à l'invention en situation d'ancrage sur un montant ;
- la figure 7 sont des vues de côté et de face d'un organe d'ancrage pour un étrier selon l'invention ;
- la figure 8 est une vue en perspective d'un étrier conforme à l'invention en situation d'ancrage sur un montant et avec une barre serrée dans ledit étrier.

Un étrier 1 selon l'invention est décrit en référence aux figures 2 à 8. Un tel étrier 1 comporte :
- une bague 2 pourvue d'une face interne 20 délimitant un passage 21 pour une barre 8 et d'une face externe 22 ; et
- un organe formant butée 3 faisant saillie de la face externe 22 de la bague 2.

Concernant la bague 2, sa face interne 20 est sensiblement cylindrique et de révolution autour d'un axe central A et le passage 21 est donc de section sensiblement circulaire centré sur l'axe central A. La face externe 22 de la bague 2 présente une partie arquée ou courbée enveloppant en partie le passage 21 et une partie plane 23 destinée à venir en appui plan contre un montant 7, où ladite partie plane 23 est sensiblement parallèle à l'axe central A.

La bague 2 présente également deux faces transversales, respectivement une face avant 28 et une face arrière 29, sensiblement normales à l'axe central A, et reliant les faces interne 20 et externe 22.

Un orifice 24 rectiligne, de section circulaire, est ménagé dans la bague 2 entre sa face interne 20 et sa face externe 22. Cet orifice 24 est du type traversant et débouche d'une part dans la face interne 20, autrement dit dans le passage 21, et débouche d'autre part dans la face externe 22, et plus particulièrement dans sa partie plane 23.

L'orifice 24 est incliné par rapport à l'axe central A selon un angle Ω aigu, inférieur à 90°. Cet orifice 24 est également incliné par rapport à la face interne 20 de la bague 2, signifiant qu'il débouche en biais ou à l'oblique dans ladite face interne 20. Enfin, cet orifice 24 est incliné par rapport à la partie plane 23 de la face externe 22 de la bague 2, signifiant aussi qu'il débouche en biais ou à l'oblique dans ladite partie plane 23. En outre, cet orifice 24 présente un filetage interne.

L'orifice 24 est également incliné par rapport aux faces avant 28 et arrière 29 de la bague 2 de sorte que, à partir de la face interne 20 jusqu'à la face externe 22, l'orifice 24 s'éloigne de la face avant 28 et se rapproche de la face arrière 29 ; l'entrée de l'orifice 24 prévue dans la face interne 20 étant située plus proche de la face avant 28 que la sortie de l'orifice 24 prévue dans la face externe 22. L'orifice 24 s'étend donc en direction de la face arrière 29 de la bague 2, entre son entrée et sa sortie.

Concernant l'organe formant butée 3, celui-ci fait saillie de la partie plane 23 de la face externe 22 de la bague 2, et se présente sous la forme d'une pièce rectiligne pourvue d'un cran 30, du type entaille ou rainure, rectiligne et délimité par deux surfaces 31, 32 inclinées à angle droit l'une par rapport à l'autre, à savoir :
- une première surface 31 saillant perpendiculairement à ladite partie plane 23 ; et
- une deuxième surface 32 prolongeant ladite première surface 31 et dirigée en direction de la face avant 28 de la bague 2.

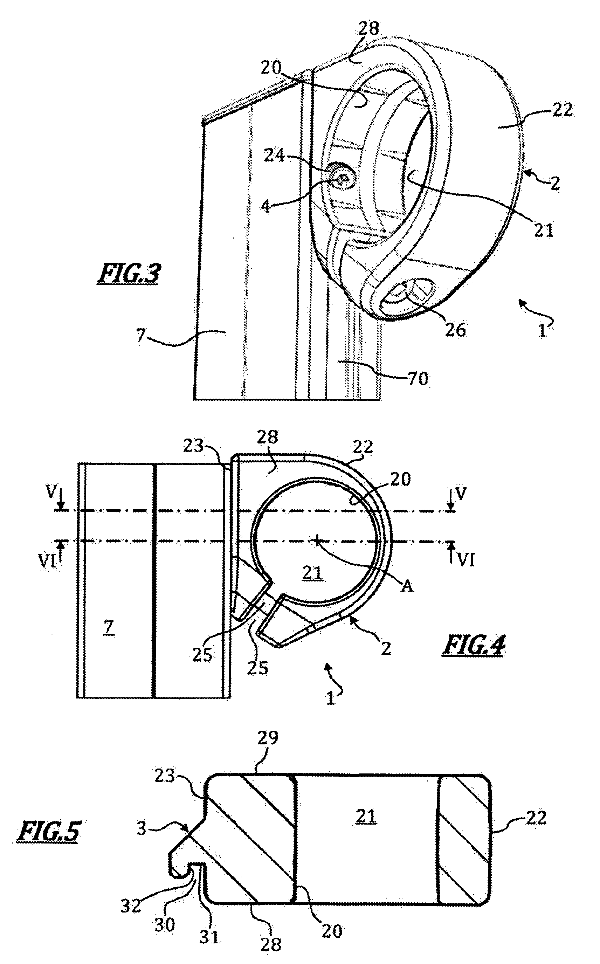

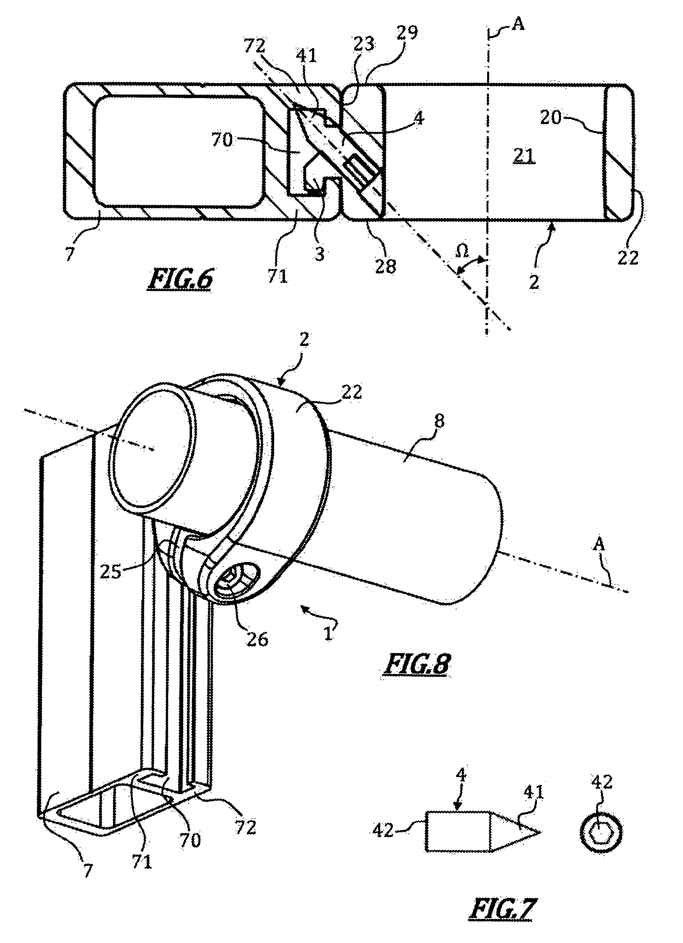

Le cran 30 est dirigé vers la face avant 28 de la bague 2. Le cran 30 s'étend de façon linéaire selon une direction sensiblement normale à l'axe central A de la bague 2 ; ledit organe formant butée 3 se présentant sous la forme d'un profilé perpendiculaire à l'axe central A et de section transversale crantée sensiblement constante, comme illustré aux figures 5 et 6.

L'orifice 24 traverse également une partie de l'organe formant butée 3 saillant de ladite partie plane 23.

L'étrier 1 selon l'invention comprend en outre un organe d'ancrage 4 constitué d'une tige filetée illustrée en figure 7 et dont une première extrémité 41 se termine en pointe et dont la deuxième extrémité 42 opposée présente une empreinte pour un outil de vissage. La tige filetée 4 est vissée dans l'orifice 4, en engageant la première extrémité 41 dans l'entrée de l'orifice 24 prévue dans la face interne 20 de la bague 2. La longueur de la tige filetée 4 est supérieure à la longueur de l'orifice 24.

En utilisation, la tige filetée 4 est vissée dans ledit orifice 24 jusqu'à déboucher hors de l'orifice 4, au niveau de sa sortie prévue dans la partie plane 23 de la face externe 22 de la bague 2, et ainsi saillir de ladite partie plane 23.

Du fait de l'inclinaison particulière de l'orifice 24, la tige filetée 4 et l'organe formant butée 3 sont divergents en s'écartant l'un de l'autre vers des directions différentes. En effet, lors du vissage de la tige filetée 4, sa première extrémité 41 s'éloigne dudit organe formant butée 3 et du cran 30, et ladite première extrémité 41 est dirigée en direction de la face arrière 29 de la bague 2 et ledit cran 30 est dirigée en direction de la face avant 28.

L'ancrage de l'étrier 1 sur le montant 7 est décrit ci-dessous en référence à la figure 6.

Le montant 7 présente une rainure 70 rectiligne dans laquelle l'étrier 1 est monté à coulissement. La rainure 70 est délimitée par deux parois latérales 71, 72 en vis-à-vis et présentant chacune un bord libre recourbé ; lesdites parois latérales 71, 72 parallèles formant ensemble un rail de guidage.

L'organe formant butée 3 est engagée dans ladite rainure 70 de sorte que le cran 30 coopère avec un bord recourbé d'une des parois latérales 71, dite première paroi latérale. Il est alors possible de faire coulisser ledit étrier 1 dans ladite rainure 70 jusqu'à la hauteur souhaitée. Pendant cette étape de réglage, la tige filetée 4 n'est pas encore complètement vissée voire est absente de l'orifice 24.

Pour que l'ancrage fonctionne, il faut que l'orifice 24 débouche dans la rainure 70 afin que la tige filetée 4 puisse s'engager dans la rainure 70 et venir en butée contre l'autre des parois latérales 72. Ensuite, au moyen d'un outil adéquat, il suffit de visser la tige filetée 4 jusqu'à ce que cette dernière vienne en butée contre la deuxième paroi latérale 72. Du fait de l'inclinaison de l'orifice 24, la tige filetée 4 imprime un effort sur la bague 2 et donc sur l'organe formant butée 3 dirigé vers le bas et la droite sur la figure 6, conduisant à pousser ledit organe formant butée 3 contre la première paroi latérale 71, et plus particulièrement à pousser les deux surfaces 31, 32 du cran 3 contre le bord recourbé de ladite première paroi latérale 71. Dans la position finale, dite position d'ancrage illustrée en figure 6, l'étrier 1 est ancré sur le montant 7 grâce à l'organe formant butée 3 et à la tige filetée 4 qui viennent prendre à l'intérieur de la rainure 70 sur les deux parois latérales 71, 72 parallèles.

Il suffit ensuite d'engager la barre 8 dans le passage 21 de la bague 2 et enfin de serrer ladite barre 8 dans ladite bague 2. Pour cela, la bague 2 est fendue et présente une fente 25 traversée par une vis 26, qui lorsqu'elle peut être vissée pour fermer la fente 25 ou dévissée pour ouvrir la fente 25, permettant ainsi de serrer plus ou moins la barre 8.

Concernant la réalisation de l'étrier 1, l'organe formant butée 3 et la bague 2 viennent de matière et sont formés ainsi d'un seul tenant dans un matériau, comme par exemple de l'aluminium.

Bien entendu l'exemple de mise en oeuvre évoqué ci-dessus ne présente aucun caractère limitatif et d'autres détails et améliorations peuvent être apportés à un étrier selon l'invention, sans pour autant sortir du cadre de l'invention où par exemple d'autres formes d'orifice et/ou de bague et/ou d'organe d'ancrage peuvent être réalisées.

## Revendications

1. Etrier (1) pour la fixation d'une barre (8) sur un montant (7), ledit étrier (1) comprenant une bague (2) pourvue d'une face interne (20) délimitant un passage (21) pour ladite barre (8) et d'une face externe (22), au moins un organe formant butée (3) faisant saillie de la face externe (22) de la bague (2), et au moins un orifice (24) destiné à accueillir un organe d'ancrage (4), ledit orifice (24) étant agencé et disposé relativement audit organe formant butée (3) de sorte que, en situation sur un montant (7), l'organe d'ancrage (4) puisse traverser ledit orifice (24) pour venir en appui contre une paroi (72) dudit montant (7) et en retour plaquer ledit organe formant butée (3) contre une autre paroi (71) dudit montant (7) afin d'ancrer ledit étrier (1) sur ledit montant (7), **caractérisé en ce que** ledit orifice (24) est ménagé traversant dans ladite bague (2) entre ses faces interne (20) et externe (22).

2. Etrier (1) selon la revendication 1, dans lequel l'orifice (24) est incliné par rapport à l'organe formant butée (3) de sorte que, dans une position dite d'ancrage de l'étrier, l'organe formant butée (3) et l'organe d'ancrage (4) sont divergents en s'écartant l'un de l'autre vers des directions différentes.

3. Etrier (1) selon la revendication 2, dans lequel l'organe formant butée (3) fait saillie d'une partie plane (23) de la face externe (22) de la bague (2), et l'orifice (24) s'étend de façon oblique par rapport à ladite partie plane (23).

4. Etrier (1) selon l'une quelconque des revendications 1 à 3, dans lequel l'organe formant butée (3) présente un cran (30) adapté pour retenir ledit organe formant butée (3) dans une rainure du montant (7).

5. Etrier (1) selon l'une quelconque des revendications 1 à 4, comprenant des moyens de serrage (25, 26) de ladite barre (8) dans ladite bague (2).

6. Etrier (1) selon la revendication 5, dans lequel les moyens de serrage comprennent une fente (25) ménagée dans ladite bague (2) et une vis (26) adaptée pour fermer plus ou moins ladite fente (25).

7. Etrier (1) selon l'une quelconque des revendications 1 à 6, dans lequel l'orifice (24) est fileté, ledit étrier (1) comprenant en outre un organe d'ancrage (4) se présentant sous la forme d'une pièce rectiligne pourvue d'un filetage externe adapté pour coopérer avec ledit orifice (24) fileté.

8. Etrier (1) selon la revendication 7, dans lequel l'organe d'ancrage (4) se termine par une pointe adaptée pour venir poinçonner une paroi (72) du montant (7) en position dite d'ancrage.

9. Ensemble comportant un étrier (1) conforme à l'une quelconque des revendications 1 à 8 et un montant (7) sur lequel est monté ledit étrier (1).

10. Ensemble selon la revendication 9, dans lequel le montant (7) comprend une rainure (70) rectiligne délimitée par deux parois (71, 72) en regard, et dans lequel l'organe formant butée (3) est plaquée contre l'une des parois (71) et l'organe d'ancrage (4) est en butée contre l'autre des parois (72).

11. Ensemble selon la revendication 10, dans lequel l'organe formant butée (3) présente un cran (30) délimité par deux surfaces (31, 32) inclinées l'une par rapport à l'autre, et dans lequel l'organe d'ancrage (4) exerce un effort de plaquage tel que les deux dites surfaces (31, 32) du cran (30) de l'organe formant butée (3) sont toutes deux en appui contre la paroi (71) correspondante délimitant ladite rainure (70).

## Claims

1. A clamp (1) for fastening a rod (8) to a post (7), said clamp (1) comprising a ring (2) having an inner side (20) defining an aperture (21) for said rod (8) and an outer side (22), at least one stop member (3) protruding from the outer side (22) of the ring (2), and at least one orifice (24) for receiving an anchoring member (4), said orifice (24) being made and arranged in relation to said stop member (3) so that the anchoring member (4), when in place on a post (7), can through said orifice (24) to rest against one wall (72) of said post (7) and in return press said stop member (3) against another wall (71) of said post (7) so as to anchor said clamp (1) on said post (7), **characterized in that** said orifice (24) is made traversing said ring (2) between the inner (20) and outer (22) sides thereof.

2. The clamp (1) according to claim 1, wherein the orifice (24) is inclined with respect to the stop member (3) so that in a so-called anchoring position of the clamp, the stop member (3) and the anchoring member (4) are divergent by spreading apart in different directions.

3. The clamp (1) according to claim 2, wherein the stop member (3) protrudes from a flat part (23) of the outer side (22) of the ring (2), and the orifice (24) extends obliquely with respect to said flat part (23).

4. The clamp (1) according to any of claims 1 to 3, wherein the stop member (3) has a notch (30) adapted for retaining said stop member (3) inside a groove of the post (7).

5. The clamp (1) according to any of claims 1 to 4, comprising means (25, 26) for clamping said rod (8) inside said ring (2).

6. The clamp (1) according to claim 5, wherein the clamping means comprise a slot (25) made in said ring (2) and a screw (26) adapted for more or less closing said slot (25).

7. The clamp (1) according to any of claims 1 to 6, wherein the orifice (24) is threaded, said clamp (1) further comprising an anchoring member (4) having the form of a rectilinear part provided with an external thread adapted to cooperate with said threaded orifice (24).

8. The clamp (1) according to claim 7, wherein the anchoring member (4) ends in a tip adapted to punch a wall (72) of the post (7) in the so-called anchoring position.

9. An assembly comprising a clamp (1) according to any of claims 1 to 8, and a post (7) on which said clamp (1) is mounted.

10. The assembly according to claim 9, wherein the post (7) comprises a rectilinear groove (70) defined by two opposite walls (71, 72), and wherein the stop member (3) is pressed against one of the walls (71), and the anchoring member (4) is in abutment against the other one of walls (72).

11. The assembly according to claim 10, wherein the stop member (3) has a notch (30) defined by two surfaces (31, 32) inclined with respect to each other, and wherein the anchoring member (4) applies a pressing force so that said two surfaces (31, 32) of the notch (30) of the stop member (3) are both resting on the corresponding wall (71) defining said groove (70).

## Patentansprüche

1. Schelle (1) zum Befestigen einer Stange (8) an einem Ständer (7), wobei die Schelle (1) einen Ring (2), der mit einer Innenseite (20), die einen Durchgang (21) für die Stange (8) begrenzt, und mit einer Außenseite (22) versehen ist, mindestens ein Anschlagorgan (3), das von der Außenseite (22) des Rings (2) absteht, und mindestens eine Öffnung (24), die dazu gedacht ist, ein Verankerungsorgan (4) aufzunehmen, umfasst, wobei die Öffnung (24) eingerichtet und im Verhältnis zu dem Anschlagorgan (3) derart angeordnet ist, dass das Verankerungsorgan (4), wenn es an einem Ständer (7) angebracht ist, durch die Öffnung (24) gehen kann, um sich an einer Wand (72) des Ständers (7) abzustützen und umgekehrt das Anschlagorgan (3) an eine andere Wand (71) des Ständers (7) anzudrücken, um die Schelle (1) an dem Ständer (7) zu verankern, **dadurch gekennzeichnet, dass** die Öffnung (24) durch den Ring (2) zwischen seinen Innen- (20) und Außen- (22) Seiten durchgehend eingerichtet ist.

2. Schelle (1) nach Anspruch 1, wobei die Öffnung (24) im Verhältnis zum Anschlagorgan (3) geneigt ist, so dass das Anschlagorgan (3) und das Verankerungsorgan (4) in einer so genannten Verankerungsposition der Schelle auseinander gehen, indem sie sich in verschiedene Richtungen voneinander trennen.

3. Schelle (1) nach Anspruch 2, wobei das Anschlagorgan (3) von einem flachen Teil (23) der Außenseite (22) des Rings (2) absteht und die Öffnung (24) sich schräg im Verhältnis zu dem flachen Teil (23) erstreckt.

4. Schelle (1) nach einem der Ansprüche 1 bis 3, wobei das Anschlagorgan (3) eine Kerbe (30) aufweist, die dazu geeignet ist, um das Anschlagorgan (3) in einer Nut des Ständers (7) zurückzuhalten.

5. Schelle (1) nach einem der Ansprüche 1 bis 4, umfassend Mittel (25, 26) zum Einklemmen der Stange (8) im Innern des Ringes (2).

6. Schelle (1) nach Anspruch 5, wobei die Einklemmmittel einen Spalt (25), der in dem Ring (2) eingerichtet ist, und eine Schraube (26), die dazu geeignet ist, um den Spalt (25) mehr oder weniger zu schließen, umfassen.

7. Schelle (1) nach einem der Ansprüche 1 bis 6, wobei die Öffnung (24) mit einem Gewinde versehen ist, wobei die Schelle (1) ferner ein Verankerungsorgan (4) umfasst, das in Form eines geradlinigen Teils vorliegt, das mit einem Außengewinde versehen ist, das dazu geeignet ist, mit der Gewindeöffnung (24) zusammenzuwirken.

8. Schelle (1) nach Anspruch 7, wobei das Verankerungsorgan (4) in einer Spitze endet, die dazu geeignet ist, eine Wand (72) des Ständers (7) in der so genannten Verankerungsposition zu durchlochen.

9. Anordnung, umfassend eine Schelle (1) nach einem der Ansprüche 1 bis 8 und einen Ständer (7), an dem die Schelle (1) montiert ist.

10. Anordnung nach Anspruch 9, wobei der Ständer (7) eine geradlinige Nut (70) umfasst, die von zwei gegenüberliegenden Wänden (71, 72) begrenzt ist, und wobei das Anschlagorgan (3) an eine der Wände (71) angepresst wird und das Verankerungsorgan (4) an der anderen Wand (72) anliegt.

11. Anordnung nach Anspruch 10, wobei das Anschlagorgan (3) eine Kerbe (30) aufweist, die durch zwei Oberflächen (31, 32) begrenzt ist, die im Verhältnis zueinander geneigt sind, und wobei das Verankerungsorgan (4) eine Andrückkraft ausübt, so dass die beiden Oberflächen (31, 32) der Kerbe (30) des Anschlagorgans (3) sich beide an der entsprechenden Wand (71) abstützen, welche die Nut (70) begrenzt.
